# EUROPÄISCHE PATENTSCHRIFT

(11) **EP 2 602 036 B1**
(45) Veröffentlichungstag und Bekanntmachung des Hinweises auf die Patenterteilung: **10.01.2018**
(21) Anmeldenummer: 12194369.0
(22) Anmeldetag: 27.11.2012
(51) Int. Cl.: B22F 3/00, B22F 3/10, F27B 5/04, F27B 5/10, F27B 14/04, F27D 5/00, A61C 13/20, F27B 17/02

(54) **Vorrichtung und Verfahren zum Sintern von Sintergut**
Apparatus and method for sintering sinter material
Dispositif et procédé destinés à fritter du matériau frittable

(30) Priorität: 09.12.2011 DE 102011056211
(43) Veröffentlichungstag der Anmeldung: 12.06.2013
(73) Patentinhaber: DENTSPLY SIRONA Inc., York, PA 17401 (US)
(72) Erfinder: Hachenberg, Jörg, 63739 Aschaffenburg (DE); Steinke, Rudi, 63457 Hanau (DE); Popp, Peter, 63826 Omersbach (DE); Wissel, Irmgard, 63579 Freigericht (DE)
(74) Vertreter: Stoffregen, Hans-Herbert

(56) Entgegenhaltungen:
- EP-A1- 2 101 133
- EP-A2- 0 524 438
- WO-A1-94/16642
- DE-A1-102008 012 578
- DE-U1-202010 007 606
- DE-U1-202011 005 465
- DE-U1-202011 106 734
- JP-A- 2002 372 373

## Beschreibung

Die Erfindung bezieht sich auf eine Vorrichtung zum Sintern von Sintergut, gemäß Anspruch 1 umfassend eine das Sintergut aufnehmende auf einer Basisplatte angeordnete Schale mit einem das Sintergut aufnehmenden Innenraum als ersten Innenraum, eine die Schale umgebende topfförmige Abdeckung, deren Rand gegenüber der Basisplatte gasdicht abgestützt ist, mit von der topfförmigen Abdeckung umgebenem Innenraum als zweiten Innenraum verbundene Schutzgaszuführungs- und -ableitungsöffnung sowie die topfförmige Abdeckung mit Basisplatte umgebenden Sinterraum als dritten Innenraum.

Ferner nimmt die Erfindung Bezug auf ein Verfahren gemäß Anspruch 8 zum Sintern von Sintergut, wie oxidationsanfälligem Material, insbesondere metallischem Sintergut, insbesondere in Form eines Zahngerüstes, unter Verwendung einer Vorrichtung umfassend eine auf einer Basisplatte angeordnete Schale, in deren Innenraum als ersten Innenraum das Sintergut eingebracht wird, eine die Schale umgebende topfförmige Abdeckung, deren Rand gegenüber der Basisplatte abgedichtet ist, sowie mit von der Abdeckung umgebenem Innenraum als zweiten Innenraum verbundene Schutzgaszuführungs- und -ableitungsöffnung, wobei der von der topfförmigen Abdeckung umgebene zweite Innenraum mit Schutzgas durchspült wird.

Eine Vorrichtung und ein Verfahren der eingangs genannten Art sind der DE 20 2010 007 606 U1 und DE 20 2010 002 533 U1 zu entnehmen. Hierzu wird in einem Sinterofen auf einem Schamottblock eine aus Quarz bestehende Schale aufgeständert, in der Dentalgerüste aus einer Silber-Palladium-Legierung oder Chrom-Kobalt-Legierung gesintert werden. Der Schamottblock und die Schale werden von einem Quarzbehälter umgeben, der über eine Graphitdichtung gegenüber einer Basisplatte abgedichtet ist, auf der der Schamottblock angeordnet ist. Sowohl die Basisplatte als auch der Schamottblock werden von Bohrungen durchsetzt, um den von dem Quarzbehälter umgebenen Innenraum, innerhalb dessen sich die Quarzschale befindet, mit Schutzgas wie Argon zu durchspülen. Um eine Oxidation der Gerüste zu vermeiden, wird das Sintern unter Schutzgasatmosphäre durchgeführt. Dabei tritt bei Temperaturen um 1200 °C eine unerwünschte Korrosion des Quarzes auf, so dass dieses zuvor mit einem Bornitridspray beschichtet wird. Das zu sinternde Material wird in der Schale auf inerten Kügelchen aus Korund, Alumina oder Zirkonia gelegt.

Die entsprechende Vorrichtung zeigt den Nachteil, dass ein Einsatz bei Temperaturen oberhalb 1200 °C nicht möglich ist; denn zum einen ist die Lebensdauer von Quarz bei entsprechenden Temperaturen stark begrenzt und zum anderen ist ein Abplatzen auf Grund des Hantierens der Quarzmaterialien dann festzustellen, wenn eine unmittelbare Berührung mit Fingerfett erfolgt.

Die DE 20 2011 106 734 U1 bezieht sich auf eine Vorrichtung zum sauerstofffreien Sintern von Metall oder Keramik und umfasst eine Bodenplatte, auf der eine Haube abgestützt ist. Innerhalb der Haube ist über eine Trägerplatte ein Sintertiegel abgestützt, in den Sintergut einbringbar ist. Ferner sind Schutzgaszuführungs- und - ableitungsöffnungen vorhanden. Als Material der Vorrichtung ist Quarzglas oder rekristallisiertes Siliziumkarbid vorgesehen.

Die WO 94/16642 A1 bezieht sich auf einen Brennofen, in dem eine Brennkammer angeordnet ist, die kopfseitig von einem Deckel abgedeckt ist, über den Gas dann strömen kann, wenn in die Brennkammer Schutzgas eingeleitet wird.

Gegenstand der EP 2 101 133 A1 ist ein Sinterofen für Dentalpräparate.

Die DE 10 2008 012 578 A1 bezieht sich auf einen Dentalofen, mit dem verschiedene Aufheizperioden durchfahren werden. Dabei kann ein Überschwingen der Heizleistung erfolgen.

Die DE 20 2011 005 465 U1 bezieht sich auf eine Vorrichtung zum sauerstofffreien Sintern von Metall oder Keramik. Dabei wird Sintergut in einem in einem Sinterbehälter vorhandenen Sintergranulat eingebettet, das z. B. aus Zirkonkügelchen bestehen kann.

Der EP-A 0 524 438 A2 sind ein Verfahren und eine Vorrichtung zum Sintern extrudierten Materials zu entnehmen. Dabei wird das Material in eine Kammer eingebracht, die beabstandet von einer Isolierung umgeben ist, die ihrerseits im Innenraum eines Ofens angeordnet ist. Dabei kann der Kammer unmittelbar über eine Leitung ein Gas zugeführt werden. Alternativ besteht die Möglichkeit, dass in die Kammer über deren Abstützung auf einer Basisplatte Gas einströmt.

Ein Vakuumsinterofen ist aus der JP 2002 372373 A bekannt. Zu prozessierendes Material ist von einer Haube abgedeckt.

Der vorliegenden Erfindung liegt die Aufgabe zugrunde, eine Vorrichtung und ein Verfahren der eingangs genannten Art so weiterzubilden, dass die Nachteile des Standes der Technik vermieden werden, insbesondere ein Sintern auch bei Temperaturen oberhalb von 1200 °C problemlos durchgeführt werden kann. Gleichfalls soll sichergestellt werden, dass unerwünschte Verfärbungen oder eine Oxidation des Sinterguts unterbleibt.

Vorrichtungsgemäß wird die Aufgabe im Wesentlichen dadurch gelöst, dass die Schale von einem Verschlusselement abgedeckt ist, und dass der erste Innenraum bei die Schale abdeckendem Verschlusselement mit dem zweiten Innenraum gasstrommäßig verbunden ist.

Die Erfindung bezieht sich u.a. auf eine Vorrichtung zum Sintern von Sintergut, umfassend eine das Sintergut aufnehmende auf einer Basisplatte angeordnete Schale mit einem das Sintergut aufnehmenden Innenraum als ersten Innenraum, eine die Schale umgebende topfförmige Abdeckung, deren Rand gegenüber der Basisplatte abgedichtet ist, mit von der topfförmigen Abdeckung umgebenem Innenraum als zweiten Innenraum verbundene Schutzgaszuführungs- und -ableitungsöffnung sowie die topfförmige Abdeckung mit Basisplatte umgebenden Sinterraum als dritten Innenraum, die sich dadurch auszeichnet, dass die topfförmige Abdeckung unmittelbar mit ihrem Rand gasdicht auf der Basisplatte abgestützt ist, dass die Schale von einem Verschlusselement abgedeckt ist, und dass der erste Innenraum bei dem die Schale abdeckenden Verschlusselement mit dem zweiten Innenraum gasstrommäßig verbunden ist.

Auf Grund der erfindungsgemäßen Lehre erfolgt ein Sintern des Sinterguts in dem von der Schale umgebenen Innenraum, der als erster Innenraum bezeichnet wird, wobei die Schale von einem Verschlusselement abgedeckt ist. Ungeachtet dessen ist der erste Innenraum von Inertgas durchströmbar, jedoch wird das Risiko, dass Störungen wie Sauerstoff in das Innere der Schale gelangen, weitgehend reduziert.

Insbesondere ist vorgesehen, dass die Abdeckung unmittelbar mit ihrem Rand gasdicht bzw. formschlüssig auf der Basisplatte abgestützt ist. Der Rand der Abdeckung sowie die Basisplatte werden in einem Umfang plan geschliffen, dass erstere ohne zusätzliche Dichtung unmittelbar auf der Basisplatte aufliegen kann, um in einem Umfang eine Abdichtung zu erzielen, dass ein Eindringen von Sauerstoff in den von der Abdeckung umschlossenen und als zweiter Innenraum bezeichneten Innenraum dem Grunde nach nicht oder nicht wesentlich möglich ist.

Durch diese Maßnahmen ist sichergestellt, dass Sauerstoff von außen in den (zweiten) Innenraum der Abdeckung, die auch als Glocke bezeichnet werden kann, und folglich auch in den von der Schale umgebenden (ersten) Innenraum nicht oder weitgehend nicht gelangt.

Hervorzuheben ist des Weiteren, dass zumindest die Schale und deren Verschlusselement wie Deckel, insbesondere jedoch Basisplatte, Schale, Verschlusselement und topfförmige oder haubenförmige oder glockenförmige Abdeckung aus einem Material aus der Gruppe SiC, SiN besteht. Durch diese Materialauswahl ergibt sich der Vorteil, dass ein Sintern bei Temperaturen oberhalb von 1200 °C, insbesondere bis 1350 °C durchgeführt werden kann, ohne dass die Materialien Schaden nehmen. Besonders bevorzugt wird SiC verwendet, da es gegenüber Sauerstoff einen reduzierenden Effekt zeigt.

Das in den Zwischenraum zwischen Schale und topfförmiger Abdeckung eingeleitete Inertgas, bei dem es sich insbesondere um Argon, gegebenenfalls aber auch um Stickstoff handeln sollte, kann nach einer Weiterbildung der Erfindung aus dem zweiten Innenraum, der von der Abdeckung umgeben ist, unmittelbar in den die Basisplatte und die Abdeckung umgebenden Sinterraum, also als dritter Innenraum bezeichneten Innenraum eines Sinterofens geführt werden. Dies resultiert in einer weiteren Konzentrationsabsenkung des Sauerstoffs im Sinterraum (dritter Innenraum) des Sinterofens. Auch ein Eindringen von Sauerstoff in den (zweiten) Innenraum der Abdeckung wird erschwert.

Eine Weiterbildung der Erfindung sieht vor, dass die Schale auf einem Durchbrüche aufweisenden Ring abgestützt ist, der seinerseits auf der Basisplatte angeordnet ist, wobei vorzugsweise die Basisplatte innerhalb des Rings von der Schutzgaszuführungsöffnung und gegebenenfalls der Schutzgasableitungsöffnung durchsetzt ist.

Alternativ wird vorgeschlagen, dass von der Schale bzw. deren Bodenwandung Vorsprünge, vorzugsweise zumindest drei gleichmäßig auf einem Kreis angeordnete Vorsprünge, ausgehen, über die die Schale auf der Basisplatte abgestützt ist.

Durch die diesbezüglichen Maßnahmen ist sichergestellt, dass die Basisplatte eine über die gesamte Fläche gleichbleibende Dicke aufweisen kann, so dass die Gefahr von Rissbildungen auf Grund der beim Sintern auftretenden Temperaturänderungen unterbleibt.

Des Weiteren zeichnet sich die Erfindung dadurch aus, dass das Sintergut in der Schale auf Schüttgut gelagert wird, das aus Vollkugeln aus Keramik, insbesondere Zirkoniumoxid oder Aluminiumoxid besteht. Bei Zirkoniumdioxid ergibt sich der Vorteil, dass sich dieses unter Sauerstoffabschluss teilweise zu Zirkoniummonooxid umwandelt. Die durch den Sauerstoffmangel entstehenden Fehlstellen führen zu einer dunklen Verfärbung.

Überraschenderweise hat diese anfängliche Sauerstoffabgabe keinen negativen Effekt und kann im Folgenden reduzierend und als Indikator dienen, da dieser Effekt im Falle eines Sauerstoffeinbruchs reversibel ist.

Aufgrund der erfindungsgemäßen Lehre wird sichergestellt, dass ein Sintern von Metalllegierungen, insbesondere Kobalt-Chrom-Legierungen wie Kobalt-Chrom-Molybdän-Legierungen, bei Temperaturen von 1200 °C und mehr, insbesondere um 1250 °C, durchgeführt werden kann, ohne dass die Gefahr von Oxidation und unkontrollierten Verfärbungen besteht. Dabei wird das Sintergut in einer Schale mit diese verschließendem Verschlusselement angeordnet, wobei sichergestellt ist, dass der das Sintergut aufnehmende (erste) Innenraum der Schale mit einem Schutzgas zum Wegführen von gegebenenfalls vorhandenem Sauerstoff durchspült wird. Das Verschlusselement wirkt wie ein Deckel bzw. ist ein solcher.

Ist bevorzugterweise das die Schale abdeckende Verschlusselement nicht dicht auf der Schale angeordnet, so könnte auch ein dichtes Aufliegen erfolgen, sofern z. B. in dem Verschlusselement selbst z. B. durch Laser ausgebildete feine Bohrungen vorgesehen sind, durch die ein Schutzgasaustausch möglich ist.

Zusätzlich besteht die Möglichkeit, die topf- oder glockenförmige Abdeckung, also die sogenannte Glocke von Schutzgas zu umspülen, das aus dem (zweiten) Innenraum der Abdeckung nach außen geführt wird.

Insbesondere ist auch von Vorteil, dass die Materialien für ein Sintern bei hohen Temperaturen geeignet sind, wobei insbesondere auf Grund der reduzierenden Wirkung Siliziumcarbid hervorzuheben ist. Alternativ ist Siliziumnitrid gegebenenfalls gleichfalls einsetzbar.

Ein Verfahren der eingangs genannten Art zeichnet sich dadurch aus, dass die Schale nach Einbringen des Sinterguts in diese von einem Verschlusselement abgedeckt wird, so dass hierüber oder zumindest über eine Öffnung in dem Verschlusselement oder über eine Öffnung in der Schale Schutzgas ins Innere der Schale, also den ersten Innenraum, eindringt, dass die topfförmige Abdeckung unmittelbar mit ihrem Rand gasdicht auf die Basisplatte abgestützt ist, und dass der von der topfförmigen Abdeckung umgebene zweite Innenraum mit einem ein Anheben der Abdeckung ausschließenden Überdruck mit dem Schutzgas beaufschlagt wird, insbesondere mit einem Überdruck p mit 1 mbar ≤ p ≤ 25 mbar , insbesondere 2 mbar ≤ p ≤10 mbar über Umgebungsdruck.

Insbesondere ist vorgesehen, dass als Sintergut ein größeres Objekt, insbesondere ein dentales Brückengerüst, insbesondere ein Brückengerüst mit zumindest drei Brückengliedern, vorzugsweise zumindest fünf Brückengliedern, verwendet wird, und dass das Sintergut in einem die Vorrichtung aufnehmenden, also diese umgebenden Sinterraum von Zimmertemperatur T_{Z} auf eine Temperatur T₁ mit 800 °C ≤ T₁ ≤ 1100 °C mit einer Heizrate R₁ mit 5 K/min ≤ R₁ ≤ 100 K/min, insbesondere 20 K/min ≤ R₁ ≤ 80 K/min, aufgeheizt, nach gegebenenfalls einer Haltezeit t₁ bei der Temperatur T₁ mit 1 min ≤ t₁ ≤ 10 min auf eine Temperatur T₂ mit 1200 °C ≤ T₂ ≤ 1350 °C mit einer Heizrate R₂ mit 5 /min ≤ R₂ ≤ 30 K/min aufgeheizt wird, das Sintergut bei der Temperatur T₂ für eine Zeit t₂ mit 5 min ≤ t₂ ≤ 120 min, insbesondere 15 min ≤ t2 ≤ 50 min gehalten wird, wobei gegebenenfalls das Sintergut anschließend, also nach der Haltezeit t₂, auf eine Temperatur T₃ mit T₃ > T₂ zum oberflächlichen Schmelzen des Sinterguts erhitzt wird, und sodann von der Temperatur T₂ bzw. T₃ auf eine Temperatur unterhalb 400 °C mit einer Abkühlrate R₃ abgekühlt wird, die vorzugsweise zumindest zu Beginn des Abkühlens 5 K/min ≤ R₃ ≤ 100 K/min beträgt. Es erfolgt sodann ein Abkühlen auf Zimmertemperatur T_{z}.

Die Erfindung sieht auch vor, dass das Sintergut zum Sintern in einem die Vorrichtung umgebenden Sinterraum von Zimmertemperatur auf eine Temperatur T₂ wie 1200 °C ≤ T₂ ≤ 1350 °C mit einer Heizrate R₁ aufgeheizt wird, bei der Temperatur T₂ über eine Zeit t₂ mit 5 min ≤ t₂ ≤ 220 min, insbesondere 15 min ≤ t₂ ≤ 60 min gehalten wird, wobei gegebenenfalls das Sintergut anschließend, also nach der Haltezeit, auf eine Temperatur T₃ mit T₃ > T₂ zum oberflächlichen Schmelzen des Sinterguts erhitzt wird, und sodann von der Temperatur T₂ bzw. T₃ auf eine Temperatur unterhalb 400 °C mit einer Abkühlrate R₃ abgekühlt wird, wobei die Abkühlrate R₃ vorzugsweise anfänglich 5 K/min ≤ R₃ ≤ 100 K/min beträgt.

Dabei ist insbesondere vorgesehen, dass die Heizrate R₁ auf einen Wert mit 5 K/min ≤ R₁ ≤ 100 K/min, insbesondere 20 K/min ≤ R₁ ≤ 80 K/min eingestellt wird.

Das Aufheizen auf eine Temperatur T₁ und das gegebenenfalls erfolgende Halten bei der Temperatur T₁, um sodann auf eine Temperatur T₂ weiter aufgeheizt zu werden, wird für größere Objekte wie Brückengerüste bevorzugt durchgeführt.

Das zunächst erfolgende Aufheizen auf die Temperatur T₁ und sodann auf die Temperatur T₂ mit einer gegebenenfalls abweichenden Aufheizrate kann dahingehend geändert werden, dass unmittelbar ein Aufheizen auf die Temperatur T₂ erfolgt, sofern es sich bei dem Sintergut um kleinere Objekte, wie ein Gerüst für einen Zahn, handelt.

Das kurzzeitige Aufschmelzen der Oberfläche, das unabhängig von der Größe des Objekts durchgeführt werden kann, stellt dabei einen eigenerfinderischen Vorschlag dar, der auch dann zur Anwendung gelangen kann, wenn zum Sintern eine Vorrichtung benutzt wird, die von der erfindungsgemäßen Lehre abweicht.

Zusätzlich kann vorgesehen sein, dass nach dem Abkühlen des Sinterguts auf die Temperatur T₁ die Basisplatte mit der Schale, deren Verschlusselement und der Abdeckung aus dem Sinterraum zumindest bereichsweise, vorzugsweise vollständig entfernt wird. Der Sinterraum kann Innenraum eines Sinterofens sein, der als dritter Innenraum zu bezeichnen ist.

Unabhängig von den zuvor angegebenen Temperaturen und Heizraten ist als eigenerfinderisches Merkmal noch hervorzuheben, dass die Möglichkeit besteht, nach dem Dichtsintern ein zusätzliches Aufheizen durchzuführen, auf Grund dessen das Sintergut oberflächlich schmilzt, um gewünschte Oberflächeneigenschaften zu erzielen.

Die kurzzeitig hohen Temperaturen im Inneren der Schale führen zu einem oberflächlichen Schmelzen, so dass bei Gerüsten die Oberfläche annähernd wie bereits zahntechnisch poliert erscheint.

Insbesondere ist vorgesehen, dass die Schutzgaseinlass- und/oder -auslassöffnung mit einer Zu- bzw. Ableitung verbunden ist, die aus Aluminiumoxid besteht. Dabei kann die Leitung mit einem Hochtemperaturklebstoff, insbesondere auf Aluminiumoxidbasis, mit der Basisplatte verbunden werden.

Bei der Wahl von SiC als Material für die Basisplatte, die Abdeckung, die Schale und deren Verschlusselement nutzt man die gute Wärmeleitfähigkeit und nahezu vollständige Dichtheit des Materials aus. Infolgedessen werden Temperaturunterschiede innerhalb der Bauteile minimiert. Thermische Spannungen werden dadurch reduziert. Infolgedessen sind schnelle Temperaturwechsel auch bei großen Bauteilen von z. B. Durchmesser von 100 mm möglich. Ferner zeigt SiC einen Reduziereffekt und ist in der Lage, Restsauerstoff in der Atmosphäre mit dem enthaltenen Kohlenstoff zu Kohlenmonoxid umzuwandeln. Dieser Effekt geht nicht verloren. Gleichzeitig ist keine messbare Abnahme der Wandstärken der Materialien feststellbar.

Die Lagerung des Sinterguts in einer nicht dicht verschlossenen Sinterschale verbessert das Sinterergebnis. Grund für die Verbesserung kann die Schaffung eines in Bezug auf Sauerstoff mit reduzierenden Wänden versehenen Innenraums sein. Es erfolgt eine Abschwächung der Störung durch Sauerstoff. Entsprechende Störungen können das Sintergut nicht mehr direkt erreichen. Es steigt die Wahrscheinlichkeit, dass die Störungen ausgewaschen und somit gemildert werden.

Das kontrollierte Zuführen und Abführen von Inertgas stellt sicher, dass der Innendruck in der Abdeckung nicht derart ansteigen kann, dass diese angehoben wird. Auf diese Weise gelingt ein Sauerstoffausschluss. Anstelle von einer oder mehrerer Schutzgasableitungsöffnungen in der Basisplatte kann auch in der Abdeckung z. B. zumindest eine durch Laser ausgebildete Öffnung vorhanden sein, um kontrolliert Inertgas auslassen zu können.

Abweichend von üblichen Techniken werden keine Hohlkugeln zum Lagern des Sinterguts in der Schale eingesetzt. Hohlkugeln können Sauerstoff speichern und vergiften somit bei hohen Temperaturen die Atmosphäre in unmittelbarer Nähe des Sinterguts. Erfindungsgemäß werden dichte Kugeln eingesetzt, die Sauerstoff nicht speichern können. Dabei zeigt sich Zirkoniumoxid als Material für die Kugeln überraschenderweise als geeignet, obwohl dieses anfänglich in sauerstoffarmer Atmosphäre zur Sauerstoffabgabe neigt. Nach erfolgter Sauerstoffabgabe, die z. B. durch einen Temperaturzyklus erzielt wird, zeigen entsprechende Vollkugeln aus Zirkoniumoxid reduzierende Wirkung für Sauerstoff.

Um die Abdeckung und die Schale ordnungsgemäß auf der Basisplatte zu positionieren, sieht der Stand der Technik üblicherweise Stufen vor. Hiervon löst sich die Erfindung und setzt eine ebene Platte ein, die auf einfache Weise im Bereich der Kontaktflächen mit der Abdeckung poliert werden kann, damit in einem Umfang eine Abdichtung erfolgt, dass ein Eindringen von Sauerstoff dem Grunde nach nicht oder nicht wesentlich möglich ist. Da keine Stufen vorhanden sind, ergeben sich auch keine Dickenunterschiede in der Basisplatte, so dass infolgedessen thermische Spannungen reduziert werden.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Zeichnungen zu entnehmenden bevorzugten Ausführungsbeispielen.

Es zeigen:
- Fig. 1: eine erste Ausführungsform einer Vorrichtung zum Sintern von Sintergut,
- Fig. 2: eine zweite Ausführungsform einer entsprechenden Vorrichtung und
- Fig. 3: ein Zeittemperaturdiagramm.

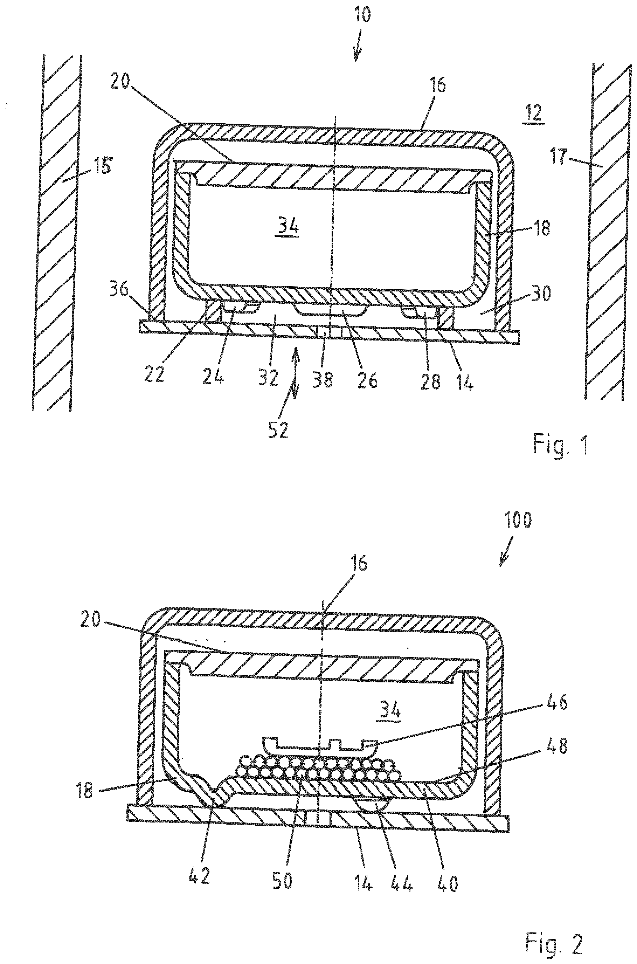

In den Fig. 1 und 2, in denen grundsätzlich für gleiche Elemente gleiche Bezugszeichen verwendet werden, ist jeweils rein prinzipiell eine Ausführungsform einer Vorrichtung 10, 100 dargestellt, mit der metallisches Sintergut, insbesondere Zahngerüste gesintert werden. Wie sich aus der Fig. 1 prinzipiell ergibt, befindet sich die Vorrichtung 10 - entsprechend die Vorrichtung 100 - in einem Innen- oder Sinterraum 12 eines Sinterofens, von dem Abschnitte von Wandungen 15, 17 prinzipiell dargestellt sind. In dem Sinterraum 12, der auch als dritter Innenraum bezeichnet wird, werden die erforderlichen Temperaturen eingestellt, um in der Vorrichtung 10, 100 vorhandenes Sintergut im erforderlichen Umfang zu sintern.

Die Vorrichtung 10 besteht aus einer Basisplatte 14, einer als Glocke zu bezeichnenden topf- oder haubenförmigen Abdeckung 16, einer im Schnitt U-förmigen Schale 18 sowie einem als Verschlusselement bezeichneten Deckel 20, mittels dessen die Schale 18 grundsätzlich nicht völlig dicht verschlossen wird.

Des Weiteren ist die Schale 18 über ein Ringelement 22 auf der Basisplatte 14 abgestützt. Das Ringelement 22 weist Aussparungen 24, 26, 28 auf, damit eine Verbindung zwischen dem von der Glocke 16 umgebenen Innenraum 30 - als zweiter Innenraum bezeichnet - und dem von dem Ringelement 22 umgebenen Raum 32 besteht. In dem von der Schale 18 umgebenen und von dem Deckel 20 abgeschlossenen Innenraum 34, der als erster Innenraum bezeichnet wird, wird das in Fig. 1 nicht dargestellte Sintergut angeordnet.

Entsprechend der erfindungsgemäßen Lehre sind die Basisplatte 14, die Glocke 16, die Schale 18, der Deckel 20 sowie das Ringelement 22 bevorzugterweise aus SiC hergestellt, gleichwenn als alternative Materialien auch SiN in Frage kommen kann.

Die Basisplatte 14 und der umlaufende Rand 36 der Glocke 16 sind in einem Umfang plan geschliffen, dass ein formschlüssiges Aufstehen der Glocke 16 auf der Basisplatte 14 sichergestellt ist. Hierdurch wird dem Grunde nach ein Eindringen von Sauerstoff verhindert.

Erfindungsgemäß sollte der Deckel 20 den (ersten) Innenraum 34 der Schale 18 nicht vollständig abdichten, so dass strömungstechnisch eine Verbindung zwischen dem (zweiten) Innenraum 30, der sich zwischen der Schale 18 und der Glocke 16 erstreckt, mit dem von der Schale 18 umgebenden ersten Innenraum 34 besteht. Liegt der Deckel 20 abdichtend auf der Schale 18, so weist der Deckel 20 zumindest eine Durchbrechung auf, damit ein Durchspülen des Innenraums 34 der Schale 18 erfolgen kann. Äquivalent wäre eine Durchbrechung in der Schale 18.

Um Oxidation und Verfärbungen zu vermeiden, wird dem zweiten Innenraum 30 über eine im Ausführungsbeispiel in der Basisplatte 14 vorhandene Öffnung 38 ein Schutzgas wie z.B. Argon oder Stickstoff zugeführt. Dieses Schutzgas gelangt in den von der Schale 18 umgebenen ersten Innenraum 34, da erwähntermaßen der Deckel 20 die Schale 18 nicht abdichtet. Alternativ oder ergänzend gelangt das Schutzgas über die zumindest eine Durchbrechung in dem Deckel 20 und/oder in der Wandung der Schale 18.

Das dem zweiten Innenraum 30 zugeführte Gas strömt sodann über eine vorzugsweise gleichfalls in der Basisplatte 14 vorhandene Öffnung aus. Es besteht jedoch auch die Möglichkeit, in der Umfangswandung der Glocke 16 z.B. mittels Laser zumindest eine Öffnung zu bilden, über die Gas ausströmt. Dabei wird das ausströmende Gas vorzugsweise derart in den Sinterraum 12 - also den dritten Innenraum - geleitet, dass die Glocke 16 zumindest im Bereich deren umlaufenden Randes 30 mit Schutzgas umspült wird.

Dadurch, dass der Deckel 20 nicht abdichtend auf der Schale 18 aufliegt, kann Schutzgas in den von der Schale 18 umgebenen ersten Innenraum 34 strömen, in dem sich das Sintergut befindet. Gleichzeitig wird jedoch ein Eindringen von Sauerstoff (Störungen) reduziert. Entsprechendes gilt in Bezug auf die zumindest eine Durchbrechung.

Der (zweite) Innenraum 30 sollte gegenüber der Umgebung einen erhöhten Druck aufweisen, wobei ein Überdruck zwischen 1 mbar und 25 mbar, insbesondere zwischen 2 mbar und 10 mbar zu bevorzugen ist.

Das Ausführungsbeispiel der Fig. 2 unterscheidet sich von dem der Fig. 1 dahingehend, dass die Schale 18 nicht auf einem Ring 22, sondern über von der Bodenwandung 40 der Schale 18 abragende Vorsprünge 42, 44 abgestützt ist. Dabei sind insbesondere drei Vorsprünge vorgesehen, die gleichmäßig verteilt auf einem Kreis angeordnet sind. Ansonsten entspricht die Ausführungsform der der Fig. 1, so dass auf die diesbezüglichen Erläuterungen verwiesen wird.

Durch die Abstützung der Schale 18 auf dem Ring 22 oder über die Vorsprünge 42, 44 ergibt sich der Vorteil, dass die Basisplatte 14 eine gleichbleibende Dicke aufweist, so dass Dickenunterschiede vermieden und infolgedessen interne Spannungen reduziert werden.

Damit beim Sintern das in dem ersten Innenraum 34 vorhandene Sintergut 46 die Innenflächen der Schale 18 nicht berührt, ist auf der Innenseite 48 der Bodenwandung 40, also der Bodenfläche ein kugeliges Schüttgut 50 eingebracht, das aus Vollkugeln, also nicht aus Hohlkugeln, besteht. Als Materialien kommen bevorzugterweise Aluminiumoxid oder Zirkoniumoxid in Frage. Die Vollkugeln haben den Vorteil, dass Sauerstoff nicht gespeichert werden kann. Dies gilt auch für Zirkoniumoxidkugeln, die zwar in sauerstoffarmer Atmosphäre anfangs zu Sauerstoffabgabe neigen. Nach erfolgter Sauerstoffabgabe zeigen diese jedoch reduzierende Wirkung.

Als bevorzugte Abmessungen der insbesondere aus Siliziumcarbid bestehenden Bauelemente sind anzugeben:

| | |
|---|---|
| Basisplatte 14: | Durchmesser 90 mm bis 110 mm, Dicke 2 bis 4 mm; |
| Glocke 16: | Außendurchmesser 95 mm bis 105 mm, Wandstärke 3 mm bis 5 mm, Höhe 50 mm bis 55 mm; |
| Ringelement 22: | 4 mm bis 8 mm, Außendurchmesser 60 mm bis 70 mm, Wandstärke 3 mm bis 5 mm; |
| Sinterschale 18: | Höhe 30 mm bis 35 mm, Außendurchmesser 80 mm bis 90 mm, Wandstärke 3 mm bis 5 mm; |
| Deckel 20: | gleich Außendurchmesser Schale 18, Dicke im Randbereich 2 mm bis 5 mm, Dicke Mittenbereich 4 mm bis 8 mm. |

Wie sich aus der zeichnerischen Darstellung ergibt, kann der Abstand zwischen Außenfläche der Schale 18 und Innenfläche der Glocke 16 relativ klein gewählt werden. Dies hat den Vorteil, dass hierdurch ein Eindringen von Sauerstoff in den (ersten) Innenraum 34 der Schale 18 zusätzlich behindert wird, insbesondere dann, wenn sich die Schutzgasauslassöffnung im Randbereich der Glocke 16 befindet und diese durchsetzt.

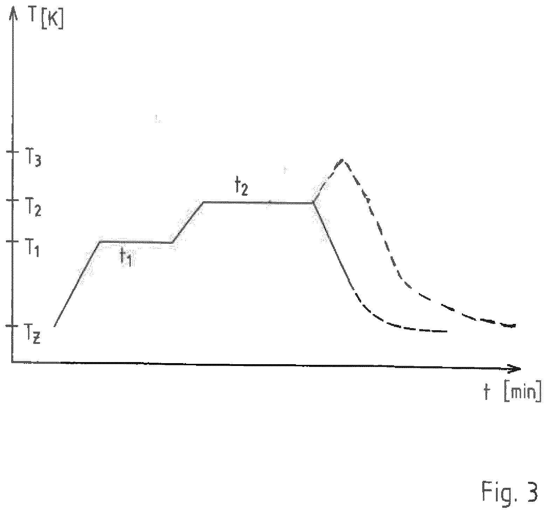

Der Fig. 3 ist eine Heiz- und Kühlkurve zu entnehmen, um das Sintergut 46 zu sintern. Die Kurve gemäß Fig. 3 gilt für ein größeres Objekt, das zu sintern ist. Als Beispiel ist ein zahntechnisches Brückengerüst mit 4 Gliedern zu nennen.

Rein prinzipiell ergibt sich, dass der Sinterofen und damit der Sinterraum 12 infolgedessen auch das Sintergut 46 zunächst von Zimmertemperatur T_{Z} auf eine Temperatur T₁ aufgeheizt wird, wobei T₁ zwischen 800 °C und 1100 °C bei Kobalt-Chrom-Legierungen als Material für das Sintergut 46 liegt. Die Aufheizrate sollte bevorzugterweise zwischen 20 K/min und 80 K/min liegen. Auf der Temperatur T₁ wird das Sintergut 46 über eine Zeit t₁ zwischen 1 min und 10 min gehalten. Sodann erfolgt eine Aufheizung von der Temperatur T₁ auf eine Temperatur T₂ zwischen 1200 °C und 1350 °C mit einer Aufheizrate zwischen 5 K/min und 30 K/min. Bei der Temperatur T₂ wird das Sintergut 46 über eine Zeit t₂ zwischen 5 und 120 min gehalten und sodann auf eine Temperatur unterhalb von 400 °C abgekühlt, wobei zumindest eine Abkühlrate zwischen 5 K/min und 100 K/min zu wählen ist.

Sodann erfolgt eine Abkühlung auf Zimmertemperatur, wobei bevorzugterweise die Vorrichtung 10, 100 aus dem Sinterraum 12 entfernt wird. Hierzu kann die Vorrichtung 10, 100 abgesenkt werden, wie durch den Doppelpfeil 52 symbolisiert wird. Gegebenenfalls kann das Sintergut nach dem Abkühlen auf die Temperatur T₁ über eine Zeit zwischen 1 min und 10 min bei der Temperatur T₁ gehalten werden. Sodann erfolgt ein Abkühlen auf Zimmertemperatur T_{Z}.

Wie sich aus der Prinzipdarstellung der Fig. 3 ergibt, kann das Sintergut nach Erreichen der Sintertemperatur T₂ kurzfristig auf eine höhere Temperatur T₃ (gestrichelter Bereich) erhitzt werden, um ein oberflächliches Schmelzen zu erreichen. Das kurzzeitige gezielte Anschmelzen kann während der Haltezeit t₂, vorzugsweise nach der Haltezeit t₂ durchgeführt werden. Letzteres ergibt sich aus der Fig. 3.

Das Aufheizen auf die Temperatur T₁, Halten bei dieser Temperatur und sodann das weitere Aufheizen auf die Temperatur T₂ mit gegebenenfalls voneinander abweichenden Aufheizraten beim Sintern kleiner Objekte, wie ein Gerüst für einen Zahn, ist nicht erforderlich. Vielmehr kann ein unmittelbares Aufheizen von der Zimmertemperatur auf die Temperatur T₂ erfolgen. Unabhängig hiervon besteht gleichfalls die Möglichkeit, nach dem Halten auf der Temperatur T₂ eine kurzfristige Temperaturerhöhung auf eine Temperatur T₃ durchzuführen, um ein oberflächliches Aufschmelzen des Sintergutes zu erreichen.

## Patentansprüche

1. Vorrichtung (10, 100) zum Sintern von Sintergut, umfassend
- eine das Sintergut aufnehmende auf einer Basisplatte (14) angeordnete Schale (18) mit einem das Sintergut aufnehmenden Innenraum (34) als ersten Innenraum,
- eine die Schale umgebende topfförmige Abdeckung (16), deren Rand (36) gegenüber der Basisplatte abgedichtet ist,
- mit von der topfförmigen Abdeckung umgebenem Innenraum (30) als zweiten Innenraum verbundene Schutzgaszuführungs- und -ableitungsöffnung (38) sowie
- die topfförmige Abdeckung mit Basisplatte umgebenden Sinterraum (12) als dritten Innenraum,
**dadurch gekennzeichnet,**
**dass** die topfförmige Abdeckung (16) unmittelbar mit ihrem Rand gasdicht auf der Basisplatte (14) abgestützt ist, dass die Schale (18) von einem Verschlusselement (20) abgedeckt ist, und dass der erste Innenraum (34) bei die Schale abdeckendem Verschlusselement mit dem zweiten Innenraum gasstrommäßig verbunden ist.

2. Vorrichtung nach Anspruch 1,
**dadurch gekennzeichnet,**
**dass** das Sintergut (46) ein Sintergut aus der Gruppe oxidationsanfälliges Material, metallisches Sintergut, Zahngerüst ist.

3. Vorrichtung nach zumindest Anspruch 1,
**dadurch gekennzeichnet,**
**dass** die Abdeckung (16) unmittelbar mit ihrem Rand (36) formschlüssig auf der Basisplatte (14) abgestützt ist.

4. Vorrichtung nach zumindest einem der vorherigen Ansprüche,
**dadurch gekennzeichnet,**
**dass** die Schale (18) auf einem Durchbrüche (24, 26, 28) aufweisenden Ring (22) abgestützt ist, der seinerseits auf der Basisplatte (14) angeordnet ist, wobei insbesondere die Basisplatte (14) innerhalb des Rings von der Schutzgaszuführungsöffnung (38) und gegebenenfalls der Schutzgasableitungsöffnung durchsetzt ist.

5. Vorrichtung nach zumindest einem der vorherigen Ansprüche,
**dadurch gekennzeichnet,**
**dass** Vorsprünge (42, 44) von der Schale (18) bzw. deren Bodenwandung (40), vorzugsweise zumindest drei gleichmäßig auf einem Kreis angeordnete Vorsprünge, ausgehen, über die die Schale auf der Basisplatte (14) abgestützt ist.

6. Vorrichtung nach zumindest einem der vorherigen Ansprüche,
**dadurch gekennzeichnet,**
**dass** in der Schale (18) das Sintergut (46) auf Schüttgut (50) in Form von Vollkugeln aus Keramik, insbesondere aus Zirkoniumoxid oder Al₂ O₃, angeordnet ist.

7. Vorrichtung nach Anspruch 1,
**dadurch gekennzeichnet,**
**dass** die Basisplatte (14), die Schale (18), das Verschlusselement (20) und die topfförmige Abdeckung (16) aus einem Material aus der Gruppe SiC, SiN bestehen.

8. Verfahren zum Sintern von Sintergut (46), unter Verwendung einer Vorrichtung (10, 100) umfassend eine auf einer Basisplatte (14) angeordneten Schale (18) in deren Innenraum (34) als ersten Innenraum das Sintergut eingebracht wird, eine die Schale umgebende topfförmige Abdeckung (16), deren Rand (36) gegenüber der Basisplatte abgedichtet ist, sowie mit von der Abdeckung umgebenem Innenraum (30) als zweiten Innenraum verbundene Schutzgaszuführungs- und -ableitungsöffnung (38), wobei der von der topfförmigen Abdeckung umgebene zweite Innenraum mit Schutzgas durchspült wird,
**dadurch gekennzeichnet,**
**dass** die Schale (18) nach Einbringen des Sinterguts (46) in diese von einem Verschlusselement (20) abgedeckt wird, über das oder über zumindest eine Öffnung in dem Verschlusselement oder über zumindest eine Öffnung in der Schale Schutzgas in den Innenraum (34) der Schale eindringt, dass die topfförmige Abdeckung (16) unmittelbar mit ihrem Rand gasdicht auf der Basisplatte (14) abgestützt wird, und dass der von der topfförmigen Abdeckung umgebene zweite Innenraum (30) mit einem ein Anheben der Abdeckung ausschließenden Überdruck mit dem Schutzgas beaufschlagt wird.

9. Verfahren nach Anspruch 8,
**dadurch gekennzeichnet,**
**dass** der zweite Innenraum mit einem Überdruck p mit 1 mbar ≤ p ≤ 25 mbar beaufschlagt wird.

10. Verfahren nach Anspruch 8 oder 9,
**dadurch gekennzeichnet,**
**dass** als das Sintergut (46) ein Sintergut aus der Gruppe oxidationsanfälliges Material, metallisches Sintergut verwendet wird, insbesondere als Sintergut ein solches aus einer Kobalt-Chrom-Legierung, vorzugsweise aus einer CoCrMo-Legierung, verwendet wird.

11. Verfahren nach zumindest Anspruch 8,
**dadurch gekennzeichnet,**
**dass** als Sintergut (46) ein größeres Objekt, insbesondere ein dentales Brückengerüst, insbesondere ein Brückengerüst mit zumindest drei Brückengliedern, insbesondere fünf Brückengliedern, verwendet wird, und dass das Sintergut in einem die Vorrichtung umgebenden Sinterraum von Zimmertemperatur auf eine Temperatur T₁ mit 800 °C ≤ T₁ ≤ 1100 °C mit einer Heizrate R₁ mit 5 K/min ≤ R₁ ≤ 100 K/min, insbesondere 20 K/min ≤ R₁ ≤ 80 K/min, aufgeheizt wird, nach gegebenenfalls einer Haltezeit t₁ bei der Temperatur T₁ mit 1 min ≤ t₁ ≤ 10 min auf eine Temperatur T₂ mit 1200 °C ≤ T₂ ≤ 1350 °C mit einer Heizrate R₂ mit 5 /min ≤ R₂ ≤ 30 K/min aufgeheizt wird, das Sintergut bei der Temperatur T₂ für eine Zeit t₂ mit 5 min ≤ t₂ ≤ 120 min, insbesondere 15 min ≤ t2 ≤ 50 min gehalten wird, wobei gegebenenfalls das Sintergut anschließend auf eine Temperatur T₃ mit T₃ > T₂ zum oberflächlichen Schmelzen des Sinterguts erhitzt wird, und sodann von der Temperatur T₂ bzw. T₃ auf eine Temperatur unterhalb 400 °C mit einer Abkühlrate R₃ abgekühlt wird, die vorzugsweise zumindest zu Beginn des Abkühlens 5 K/min ≤ R₃ ≤ 100 K/min beträgt.

12. Verfahren nach zumindest Anspruch 8,
**dadurch gekennzeichnet,**
**dass** das Sintergut zum Sintern in einem die Vorrichtung umgebenden Sinterraum von Zimmertemperatur auf eine Temperatur T₂ mit 1200 °C ≤ T₂ ≤ 1350 °C mit einer Heizrate R₂ aufgeheizt wird, bei der Temperatur T₂ über eine Zeit t₂ mit 5 min ≤ t₂ ≤ 220 min, insbesondere 15 min ≤ t₂ ≤ 60 min, gehalten wird, wobei gegebenenfalls das Sintergut anschließend auf eine Temperatur T₃ mit T₃ > T₂ zum oberflächlichen Schmelzen des Sinterguts erhitzt wird, und sodann von der Temperatur T₂ bzw. T₃ auf eine Temperatur unterhalb 400 °C mit einer Abkühlrate R₃ abgekühlt wird, wobei die Abkühlrate R₃ vorzugsweise anfänglich 5 K/min ≤ R₃ ≤ 100 K/min beträgt.

13. Verfahren nach Anspruch 12,
**dadurch gekennzeichnet,**
**dass** die Heizrate R₂ auf einen Wert mit 5 K/min ≤ R₂ ≤ 100 K/min, insbesondere 20 K/min ≤ R₂ ≤ 80 K/min eingestellt wird.

14. Verfahren nach zumindest Anspruch 8,
**dadurch gekennzeichnet,**
**dass** zum Abkühlen auf Zimmertemperatur T₂ oder während des Abkühlens des Sinterguts die Basisplatte mit der Schale, deren Verschlusselement und der Abdeckung aus dem Sinterraum zumindest bereichsweise, vorzugsweise vollständig entfernt wird.

15. Verfahren nach Anspruch 9,
**dadurch gekennzeichnet,**
**dass** der von Abdeckung (16) umgebene zweite Innenraum (30) mit einem Druck p mit 2 mbar ≤ p ≤ 10 mbar gegenüber Umgebungsdruck beaufschlagt wird.

## Claims

1. A device (10,100) for sintering sinter products, comprising
- a tray (18), which accommodates the sinter products, is arranged on a base plate (14), with an interior chamber (34) accommodating the sinter products as the first interior chamber,
- a pot-shaped cover (16), which encompasses the tray and possesses a rim (36) that is sealed with respect to the base plate,
- with openings (38) for protective-gas supply and protective-gas discharge lines connected to the interior chamber (30) encompassed by the pot-shaped cover as the second interior chamber, as well as
- the sintering chamber (12) surrounding the pot-shaped cover with base plate as the third internal chamber,
**characterized in that**
the pot-shaped cover (16) directly rests on the base plate (14) by way of its rim (36), that the tray (18) is covered by a capping element (20), and that the first interior space (34) is connected to the second interior chamber in a gas-flow-allowing manner when the tray is covered by the capping element.

2. The device according to claim 1,
**characterized in that**
the sinter product (46) is a sinter product out of the group made up of material susceptible to oxidation, metallic sinter product, dental framework.

3. The device according to at least claim 1,
**characterized in that**
the cover (16) directly rests in a form-fitting manner on the base plate (14).

4. The device according to at least one of the preceding claims,
**characterized in that**
the tray (18) is supported on a ring (22), which possesses openings (24, 26, 28) and in turn is arranged on the base plate (14), whereby especially through the base plate (14.) inside of the ring passes the protective gas supply opening (38) and possibly the protective gas discharge opening.

5. The device according to at least one of the preceding claims,
**characterized in that**
projections (42, 44) originate from the tray (18) or its bottom wall (40), preferably three projections arranged equidistant on a circle, via which the tray is supported on the base plate (14).

6. The device according to at least one of the preceding claims,
**characterized in that**
in the tray (18) the sinter product (46) is arranged on bulk material (50) in form of solid balls of ceramics, in particular of zirconia or Al₂O₃.

7. The device according to at least one of the preceding claims,
**characterized in that**
the base plate (14), the tray (18), the capping element (20), and the pot-shaped cover (16) consist of a material out of the group that is made up of SiC, SiN.

8. A method for sintering sinter products (46), utilizing a device (10,100) that comprises a tray (18), which is arranged on a base plate (14) and possesses an interior chamber (34) as the first interior chamber, into which the sinter product is introduced, a pot-shaped cover (16) surrounding the tray with a rim (36) that is sealed with respect to the base plate, as well as protective-gas supply and discharge openings connected to the interior chamber (30) surrounded by the cover as the second interior chamber, whereby protective gas flows through the second interior chamber that is surrounded by the pot-shaped cover,
**characterized in that**
the tray (18), after the sinter product (46) has been placed into it, is covered by a capping element (20), via which, or via at least one opening in the capping element, or via at least one opening in the tray, protective gas enters the interior chamber (34) of the tray, that the pot-shaped cover (16) directly rests on the baseplate (14) by way of its rim, and that the second interior chamber (10) surrounded by the pot-shaped cover is charged with protective gas to an excess that rules out a lifting of the cover.

9. The method according to claim 8,
**characterized in that**
a pressure burden p with 1 mbar ≤ p ≤ 25 mbar is admitted to the second interior chamber (30).

10. The method according to claim 8 or 9,
**characterized in that**
as sinter product (46) one uses a sinter product selected from the group made up of material susceptible to oxidation, metallic sinter product, especially as sinter product one uses a product that consists of a cobalt chromium alloy, preferably a CoCrMo alloy.

11. The method according to at least claim 8,
**characterized in that**
as sinter product one uses a larger object, in particular a dental bridge framework, in particular a bridge framework with at least three bridge elements, in particular five bridge elements, and that the sinter products are heated in a sintering chamber surrounding the device from room temperature to a temperature T₁ with 800 °C ≤ T₁ ≤ 1100 °C at a heating rate R₁ with 5 K/min ≤ R₁ ≤ 100 K/min, in particular 20 K/min ≤ R₁ ≤ 80 K/min, after a possible holding time t₁ at the temperature T₁ with 1 min ≤ t₁ ≤ 10 min is heated to a temperature T₂ with 1200 °C ≤ T₂ ≤ 1350 °C at a heating rate R₂ with 5 /min ≤ R₂ ≤ 30 K/min, the sinter product is held at the temperature T₂ for a time period T₂ with 5 min ≤ t₂ ≤ 120 min, in particular 15 min ≤ t₂ ≤ 50 min, whereby possibly the product to be sintered subsequently is heated to a temperature T₃ with T₃ > T₂ to melt the surface of the product to be sintered, and subsequently is cooled from the temperature T₂ or T₃ to a temperature below 400 °C with a cooling rate R₃, which preferably at least at the beginning of the cool-down amounts to 5 K/min ≤ R₃ ≤ 100 K/min.

12. The method according to at least claim 11,
**characterized in that**
the sinter product during sintering in a sintering chamber surrounding the device is heated from room temperature to a temperature T₂ with 1200 °C ≤ T₂ ≤ 1350 °C at a heating rate R₂, is held at the temperature T₂ for a time period t₂ with 5 min ≤ t₂ ≤ 220 min, in particular 15 min ≤ t₂ ≤ 60 min, whereby the sinter product subsequently possibly is heated to a temperature T₃ with T₃ > T₂ to melt the surface of the sinter product, and subsequently is cooled from the temperature T₂ or T₃ to a temperature below 400 °C at a cooling rate R₃, whereby the cooling rate R₃ preferably initially has 5 K/min ≤ R₃ ≤ 100 K/min.

13. The method according to claim 12,
**characterized in that**
the heating rate R₂ is set to a value with 5 K/min ≤ R₂ ≤ 100 K/min, in particular 20 K/min ≤ R₂ ≤ 80 K/min.

14. The method according to at least claim 8,
**characterized in that**
for cooling to room temperature T₂ or during the cooling the sinter products, the base plate with the tray, the latter's capping element, and the cover are removed from the sintering chamber at least in parts, preferably entirely.

15. The method according to claim 9,
**characterized in that**
the second interior chamber (30) surrounded by the cover (10) is charged with a pressure p with 2 mbar ≤ p ≤ 10 mbar, relative to the ambient pressure.

## Revendications

1. Dispositif (10, 100) pour le frittage de produit fritté, comprenant
- un creuset (18) accueillant le produit fritté et disposé sur une plaque de base (14) avec un compartiment intérieur (34) accueillant le produit fritté et servant de premier compartiment intérieur,
- un couvercle (16) en forme de pot entourant le creuset et dont le bord (36) est rendu étanche par rapport à la plaque de base,
- une ouverture d'alimentation et d'évacuation du gaz protecteur (38) reliée au compartiment intérieur (30) entouré par le couvercle en forme de pot et servant de deuxième compartiment intérieur ainsi qu'un
- compartiment de frittage (12) entourant le couvercle en forme de pot avec la plaque de base et servant de troisième compartiment intérieur,
**caractérisé en ce**
**que** le couvercle en forme de pot (16) est appuyé directement par son bord sur la plaque de base (14) de manière à être étanche au gaz, que le creuset (18) est recouvert d'un élément de fermeture (20) et que le premier compartiment intérieur (34) est relié au deuxième compartiment intérieur au niveau de l'élément de fermeture recouvrant le creuset, de façon à permettre l'écoulement du gaz.

2. Dispositif selon la revendication 1,
**caractérisé en ce**
**que** le produit fritté (46) est un produit fritté appartenant au groupe matériau oxydant, produit fritté métallique, armature dentaire.

3. Dispositif selon au moins la revendication 1,
**caractérisé en ce**
**que** le couvercle (16) est appuyé directement par son bord (36) reposant sur la plaque de base (14) par complémentarité de forme.

4. Dispositif selon au moins l'une des revendications précédentes,
**caractérisé en ce**
**que** le creuset (18) est appuyé sur un anneau (22) présentant des percées (24, 26, 28), lequel est disposé sur la plaque de base (14), sachant que notamment la plaque de base (14) est traversée à l'intérieur de l'anneau par l'ouverture d'alimentation du gaz protecteur (38) et le cas échéant, par l'ouverture d'évacuation du gaz protecteur.

5. Dispositif selon au moins l'une des revendications précédentes,
**caractérisé en ce**
**que** des saillies (42, 44), de préférence au moins trois saillies disposées uniformément sur un cercle, partent du creuset (18) ou de sa paroi inférieure (40) et par le biais desquelles le creuset s'appuie sur la plaque de base (14).

6. Dispositif selon au moins une des revendications précédentes,
**caractérisé en ce**
**qu'**est disposé dans le creuset (18) le produit fritté (46) sur des produits en vrac (50) sous la forme de billes pleines en céramique, notamment en oxyde de zirconium ou en Al₂O₃.

7. Dispositif selon la revendication 1,
**caractérisé en ce**
**que** la plaque de base (14), le creuset (18), l'élément de fermeture (20) et le couvercle en forme de pot (16) sont constitués d'un matériau appartenant au groupe SiC, SiN.

8. Procédé pour le frittage de produit fritté (46) utilisant un dispositif (10, 100) comprenant un creuset (18) disposé sur une plaque de base (14) dans le compartiment intérieur (34) duquel le produit fritté est posé, lequel compartiment servant de premier compartiment intérieur, un couvercle (16) en forme de pot entourant le creuset, dont le bord (36) est rendu étanche par rapport à la plaque de base ainsi qu'une ouverture d'alimentation et d'évacuation de gaz protecteur (38) reliée au compartiment intérieur (30) entouré par le couvercle et servant de deuxième compartiment intérieur, sachant que le deuxième compartiment intérieur entouré du couvercle en forme de pot est parcouru par du gaz protecteur,
**caractérisé en ce**
**que** le creuset (18) après la pose du produit fritté (46) dans celui-ci est recouvert par un élément de fermeture (20) à travers lequel ou à travers au moins une ouverture dans l'élément de fermeture ou à travers au moins une ouverture dans le creuset le gaz protecteur pénètre dans le compartiment intérieur (34) du creuset, que le couvercle en forme de pot (16) est appuyé directement par son bord sur la plaque de base (14) de manière à être étanche au gaz, et que le deuxième compartiment intérieur (30) entouré du couvercle en forme de pot est alimenté en gaz protecteur avec une surpression empêchant un soulèvement du couvercle.

9. Procédé selon la revendication 8,
**caractérisé en ce**
**que** le deuxième compartiment intérieur est alimenté avec une surpression p où 1 mbar ≤ p ≤ 25 mbar.

10. Procédé selon la revendication 8 ou 9,
**caractérisé en ce**
**qu'**est utilisé comme produit fritté (46) un produit fritté appartenant au groupe matériau sensible à l'oxydation, produit fritté métallique, notamment un produit fritté provenant d'un alliage cobalt-chrome, de préférence d'un alliage CoCrMo.

11. Procédé selon au moins la revendication 8,
**caractérisé en ce**
**qu'**est utilisé comme produit fritté (46) un objet d'une certaine taille, en particulier une armature de bridge dentaire, en particulier une armature de bridge dentaire avec au moins trois éléments de bridge, en particulier cinq éléments de bridge, et que le produit fritté est échauffé dans un compartiment de frittage entourant le dispositif et passe de la température ambiante à une température T₁ où 800 °C ≤ T₁ ≤ 1100 °C à une vitesse de chauffage R₁ où 5 K/min ≤ R₁ ≤ 100 K/min, en particulier 20 K/min ≤ R₁ ≤ 80 K/min, est échauffé après, le cas échéant, un temps de pause t₁ à la température T₁ où 1 min ≤ t₁ ≤ 10 min à une température T₂ où 1200 °C ≤ T₂ ≤ 1350 °C à une vitesse de chauffage R₂ où5 K/min ≤ R₂ ≤ 30 K/min, le produit fritté étant maintenu à la température T₂ pour une durée t₂ où 5 min ≤ t₂ ≤ 120 min, en particulier 15 min ≤ t₂ ≤ 50 min, sachant que, le cas échéant, le produit fritté est échauffé ensuite à une température T₃ où T₃ > T₂ pour faire fondre superficiellement le produit fritté, puis est refroidi de la température T₂ ou T₃ à une température inférieure à 400°C à une vitesse de refroidissement R₃ s'élevant de préférence au moins au début du refroidissement à 5 K/min ≤ R₃ ≤ 100 K/min.

12. Procédé selon au moins la revendication 8,
**caractérisé en ce**
**que** le produit fritté est échauffé pour le frittage dans un compartiment de frittage entourant le dispositif de la température ambiante à une température T₂ où 1200 °C ≤ T₂ ≤ 1350 °C à une vitesse de chauffage R₂ pendant une durée t₂ où 5 min ≤ t₂ ≤ 220 min, en particulier 15 min ≤ t₂ ≤ 60 min, sachant que, le cas échéant, le produit fritté est ensuite échauffé à une température T₃ où T₃ > T₂ pour faire fondre superficiellement le produit fritté, puis est refroidi de la température T₂ ou T₃ à une température inférieure à 400 °C à une vitesse de refroidissement R₃, sachant que la vitesse de refroidissement R₃ s'élève de préférence au début à 5 K/min ≤ R₃ ≤ 100 K/min.

13. Procédé selon la revendication 12,
**caractérisé en ce**
**que** la vitesse de chauffage R₂ est réglée sur une valeur où 5 K/min ≤ R₂ ≤ 100 K/min, en particulier 20 K/min ≤ R₂ ≤ 80 K/min.

14. Procédé selon au moins la revendication 8,
**caractérisé en ce**
**que** pour le refroidissement à la température ambiante T₂ ou pendant le refroidissement du produit fritté, la plaque de base avec le creuset, son élément de fermeture et le couvercle est retirée du compartiment de frittage, au moins partiellement, mais de préférence complètement.

15. Procédé selon la revendication 9,
**caractérisé en ce**
**que** le deuxième compartiment intérieur (30) entouré par le couvercle (16) est soumis à 2 mbar ≤ p ≤ 10 mbar par rapport à la pression ambiante.
